# EUROPÄISCHE PATENTSCHRIFT

(11) **EP 3 415 343 B1**
(45) Veröffentlichungstag und Bekanntmachung des Hinweises auf die Patenterteilung: **12.02.2020**
(21) Anmeldenummer: 18162457.8
(22) Anmeldetag: 19.03.2018
(51) Int. Cl.: B60C 11/12, B60C 11/03

(54) **LAUFSTREIFENPROFIL EINES FAHRZEUGREIFENS FÜR DEN EINSATZ AUF WINTERLICHER FAHRBAHN**
TREAD PROFILE OF A VEHICLE TYRE FOR USE ON WINTERY ROADWAY
PROFILÉ DE BANDE DE ROULEMENT D'UN PNEU DE VÉHICULE POUR L'UTILISATION SUR UNE VOIE EN HIVER

(30) Priorität: 13.06.2017 DE 102017209903
(43) Veröffentlichungstag der Anmeldung: 19.12.2018
(73) Patentinhaber: Continental Reifen Deutschland GmbH, 30165 Hannover (DE)
(72) Erfinder: Lutz, André, 30167 Hannover (DE); Slemenska, Andrea, 02063 Lednica (SK)
(74) Vertreter: Finger, Karsten

(56) Entgegenhaltungen:
- EP-A1- 2 492 117
- DE-C- 737 817
- JP-A- H0 994 828
- JP-A- 2006 298 057
- JP-A- 2010 058 696
- KR-B1- 101 411 093
- US-A1- 2011 168 311
- US-A1- 2014 166 173

## Beschreibung

Die Erfindung betrifft ein Laufstreifenprofil eines Fahrzeugreifens für den Einsatz auf winterlicher Fahrbahn mit Profilpositiven, welche von Umfangs- und/oder Querrillen begrenzt sind, wobei wenigstens ein Profilpositiv einen Feineinschnitt aufweist, welcher sich von der Laufstreifenperipherie nach radial innen erstreckt und in einem Rillengrund endet, wobei der Feineinschnitt über seine radiale Erstreckung eine etwa gleich Breite aufweist, während der Rillengrund als Kanal ausgebildet ist, welcher eine größere Breite als der übrige Feineinschnitt aufweist, wobei der Feineinschnitt das Profilpositiv vollständig quert, sodass der Feineinschnitt samt Kanal mit seinen beiden Enden in die das Profilpositiv begrenzenden Umfangs- und/oder Querrillen mündet.

Feineinschnitte dienen beispielsweise dazu, die Fahreigenschafen auf winterlicher Fahrbahn zu verbessern, indem vermehrt Griffkanten zur Verfügung gestellt werden und indem der in den Feineinschnitten aufgenommene Schnee die Haftung des Reifens durch eine Schnee-Schnee-Verzahnung erhöht.

Darüber hinaus dienen Feineinschnitte beispielsweise bei Nutzfahrzeugreifen dazu, bei nasser Fahrbahn den Wasserfilm zu zertrennen, um bessere Nasseigenschaften dieses Laufstreifens zu erhalten.

Ein Laufstreifenprofil eingangs genannter Art ist beispielsweise aus der EP 2 492 117 A1 bekannt. Die Profilpositive des Laufstreifens sind daher mit Feineinschnitten versehen, deren Einschnittgrund als Kanal ausgebildet und daher verbreitert ist. Der Kanal weist über seine Erstreckung einen kreisförmigen Querschnitt auf, wobei, gemäß einer Variante, im mittleren Abschnitt des Kanals der dem Kreis zugrundliegende Radius variiert, derart, dass der Kanal im Bereich des mittleren Abschnittes, bezogen auf die Längserstreckung des Einschnittes, muldenartig radial nach innen eingebuchtet ist.

Aus der DE 737 817 C ist ein Laufstreifenprofil mit am Grund von Einschnitten ausgebildeten Kanälen bekannt, wobei die Kanäle gegen ihre Enden zu trichterartig erweitert sind. Darüber hinaus offenbart auch die KR 101 411 093 B1 ein Laufstreifenprofil mit derart gestalteten Einschnitten. Die Kanäle sind, betrachtet in Sicht auf eine der Einschnittwände, insgesamt derart U-artig gebogen, dass die Tiefe des jeweiligen Kanals und des zugehörigen Einschnittes von den Enden des Einschnittes bzw. des Kanals zur Mitte zunimmt.

Die EP 1 676 695 A2 offenbart ein Laufstreifenprofil, welches Profilpositive mit Feineinschnitten aufweist. Die Feineinschnitte verlaufen von der Laufstreifenperipherie beginnend in radialer Richtung. Die Breite des Feineinschnittes ist in etwa gleich, während die Breite des Rillengrundes größer, hier oval, ist. Derartige Feineinschnitte werden auch als "raindrop-" oder als "Schlüsselloch"-Feineinschnitte bezeichnet.

Durch die Verbreiterung des Feineinschnittes nach radial innen wird im angefahrenen Zustand des Laufstreifenprofils zusätzliches Leervolumen zur Verfügung gestellt, was insbesondere für die Nässeeigenschaften des Reifens von Vorteil ist. Das durch den Abrieb des Laufstreifenprofils verringerte Leervolumen wird durch die größere Breite des Feineinschnittgrundes "ausgeglichen". Das Wasser der Fahrbahnoberfläche kann trotz geringerer Profiltiefe darin gut aufgenommen werden.

Jedoch kann es in dem Profilpositiv zu einer Rissbildung kommen, welche an den Enden des Rillengrundes initiiert werden kann. Hierdurch kann die Haltbarkeit des Laufstreifenprofils herabgesetzt sein.

Es ist die Aufgabe der Erfindung, ein Laufstreifenprofil eines Fahrzeugreifens für den Einsatz auf winterlicher Fahrbahn zur Verfügung zu stellen, das in seiner Haltbarkeit verbessert ist, jedoch gleichbleibend gute Wintereigenschaften aufweist.

Gelöst wird die Aufgabe, indem der Kanal ausschließlich an seinen beiden Enden als Trichter erweitert ist, sodass die Erweiterung in der Umfangs- und/oder Querrille mündet, wobei der Kanal aus drei in Längsrichtung des Feineinschnittes hintereinander angeordneten Abschnitten besteht, wobei der erste Abschnitt und der dritte Abschnitt parallel zur axialen Richtung verlaufen, jedoch in unterschiedlichen Tiefen angeordnet sind und wobei der zweite Abschnitt den ersten Abschnitt mit dem dritten Abschnitt unter Bildung eines Winkels, welcher von dem zweiten Abschnitt und der radialen Richtung eingeschlossen wird, verbindet, wobei der Winkel in einem Bereich von 0° bis 45° liegt und wobei Hohlkugeln an den Anschlussstellen des zweiten Abschnittes an den ersten Abschnitt und des zweiten Abschnittes an den dritten Abschnitt ausgebildet sind.

Mit dem Begriff "Trichter" ist eine trichterförmige Erweiterung gemeint und umfasst beispielsweise Geometrien wie Kegelstümpfe oder Schalltrichter.
Durch die trichterartige Erweiterung der beiden Kanalenden tritt an den Kanalenden pro Flächeneinheit eine geringere Spannung auf, da durch die trichterförmige Erweiterung die Kerbwirkung verringert wird und weniger Spannungsspitzen auftreten. Es sind keine Ecken oder Kanten innerhalb des Trichters vorhanden. Hierdurch ist die Gefahr von Rissbildungen deutlich verringert, so dass die Haltbarkeit des Laufstreifenprofils verbessert ist. Die Wintereigenschaften des Laufstreifenprofils sind durch die Anordnung des Trichters nicht negativ beeinflusst.
Der Kanal kann unterschiedliche Querschnittsgeometrien wie beispielsweise eine ovale oder kreisförmige Querschnittsgeometrie aufweisen. Im Bereich der beiden Enden dieses Kanals erweitert sich der Kanal trichterförmig und mündet mit seiner größten Breite in die Umfangs- und oder Querrille. Der Trichter kann - muss aber nicht - die Querschnittsgeometrie des Kanals aufnehmen und in seiner trichterförmigen Erweiterung weiterführen.

Der Feineinschnitt weist zwei unterschiedlich tief ausgebildete Abschnitte auf, welche durch den zweiten Abschnitt miteinander verbunden sind. Beispielsweise weist der erste Abschnitt eine Tiefe auf, welche 80% bis 100% der Tiefe einer Umfangrille des Laufstreifenprofils entspricht, während die Tiefe des weniger tief ausgebildeten Abschnittes 30% bis 60% der Tiefe der vorgenannten Umfangsrille entspricht. Hierdurch ist der Zielkonflikt Wintertraktion und gleichmäßiger Laufstreifenabrieb auf einem höheren Niveau gelöst.
Der tiefe Abschnitt ist vorteilhaft für Wintertraktion, während der weniger tiefe Abschnitt für eine höhere Steifigkeit des Profilpositivs verantwortlich ist und somit für einen gleichmäßigeren Abrieb sorgt.

Es sind Hohlsphären an den Anschlussstellen des zweiten Abschnittes an den ersten Abschnitt und des zweiten Abschnittes an den dritten Abschnitt ausgebildet. Hierdurch wird die Kerbwirkung an den Anschlussstellen verringert und er treten weniger Spannungsspitzen auf. Hierdurch ist die Gefahr von Rissbildungen deutlich verringert, so dass die Haltbarkeit des Laufstreifenprofils verbessert ist.

Zweckmäßig ist es, wenn das Profilpositiv ein Profilblock oder ein Laufstreifenband ist.

Vorteilhaft ist es, wenn der Trichter eine Länge aufweist, welche in einem Bereich von 1 bis 6 mm, vorzugsweise in einem PKW- oder Zweiradreifen in einem Bereich von 1 bis 4 mm, vorzugsweise in einem LKW-Reifen in einem Bereich von 3 bis 6 mm, liegt. Die Trichterlänge wird entlang der Längsachse des Trichters gemessen. Hierdurch ist ein optimaler Kompromiss zwischen Spannungsverteilung und Funktion des Kanals erhalten.

Zweckmäßig ist es, wenn der Trichter einen Durchmesser aufweist, welcher 1,2x bis 3x, bevorzugt 2x der Breite des Kanals entspricht, wobei der Durchmesser des Trichters an der Stelle seines größten Durchmessers in radialer Richtung gemessen wird. Hierdurch ist ein optimaler Kompromiss zwischen Spannungsverteilung und Funktion des Kanals erhalten. Vorteilhaft ist es, wenn der Kanal eine Breite aufweist, welche in einem Bereich von 1,1 bis 2,0 mm liegt. Es wird ein optimaler Kompromiss zwischen der Funktion des Kanals und der Ausformbarkeit des Reifens erreicht.

Sind wenigstens zwei parallel zueinander angeordnete Feineinschnitte in dem Profilpositiv angeordnet, so ist es vorteilhaft, wenn der zweite Abschnitt des ersten Feineinschnittes eine gegenläufige Steigung zur Steigung des zweiten Abschnittes des zweiten Feineinschnittes aufweist. Hierdurch ist erreicht, dass der erste Feineinschnitt dort seinen tiefsten Abschnitt aufweist, wo der zweite Feineinschnitt seinen weniger tief ausgebildeten Abschnitt aufweist und umgekehrt. Hierdurch ist eine Vergleichmäßigung der Steifigkeit innerhalb des Profilpositivs erreicht, was positiv für einen gleichmäßigeren Abrieb ist. Sind mehr als zwei Feineinschnitte angeordnet, ist die alternierende Anordnung von tiefen und weniger tiefen Abschnitten von benachbart angeordneten Feineinschnitten über das Profilpositiv weitergeführt.

Zweckmäßig ist es, wenn die Hohlkugeln einen Durchmesser aufweisen, welcher in einem Bereich von 1,2x bis 2x Breite des Kanals liegt. Hierdurch wird ein optimaler Kompromiss zwischen der Verringerung der Rissbildungen und der Ausformbarkeit des Reifens geschaffen.

Die Erfindung betrifft ferner einen Fahrzeugluftreifen, welcher ein Laufstreifenprofil gemäß eines oder mehrerer der vorangehenden Ausführungen aufweist. Der Fahrzeugluftreifen ist vorzugsweise ein Nutzfahrzeugreifen oder ein PKW-Reifen.

"Axiale Richtung" meint die Richtung entlang der Reifenachse.
"Umfangsrichtung" meint die Richtung entlang des Reifenabrollens.
"Radiale Richtung" meint die Richtung vom Reifenmittelpunkt zum Laufstreifen.
"Breite des Feineinschnittes" meint die Ausdehnung eines Feineinschnittes quer zu seiner Längserstreckung.

Weitere Merkmale, Vorteile und Einzelheiten der Erfindung werden anhand der Zeichnungen, die schematische Ausführungsbeispiele darstellen, näher beschrieben. Dabei zeigen die
Fig. 1 eine Seitenansicht des Negativs eines Feineinschnittes eines erfindungsgemäßen Laufstreifenprofils;
Fig. 2 eine dreidimensionale Ansicht des Negativs von zwei Feineinschnitten eines erfindungsgemäßen Laufstreifenprofils in dreidimensionaler Ansicht;
Fig. 3 eine dreidimensionale Ansicht eines Laufstreifenprofilausschnittes mit Feineinschnitten;
Fig. 4 eine dreidimensionale Ansicht des Laufstreifenprofilausschnittes der Fig. 3 im Negativ.

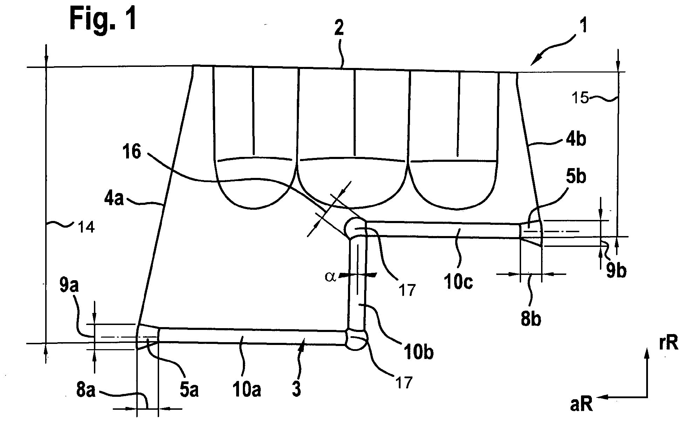

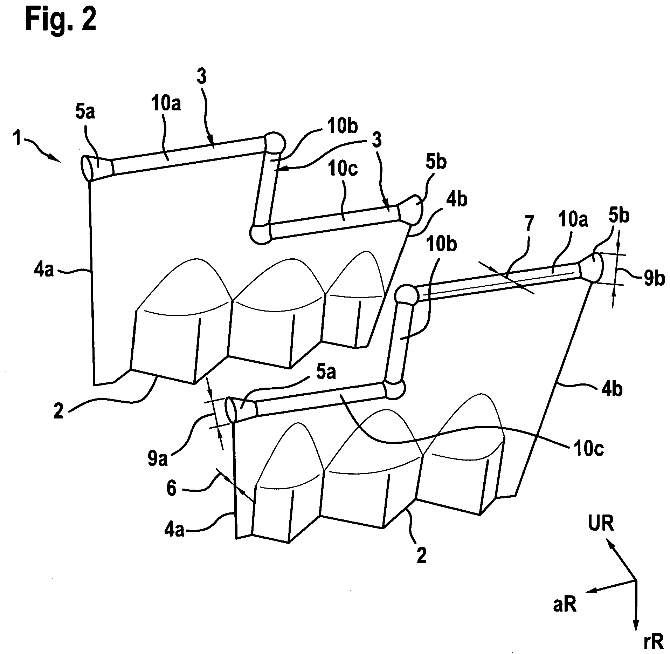

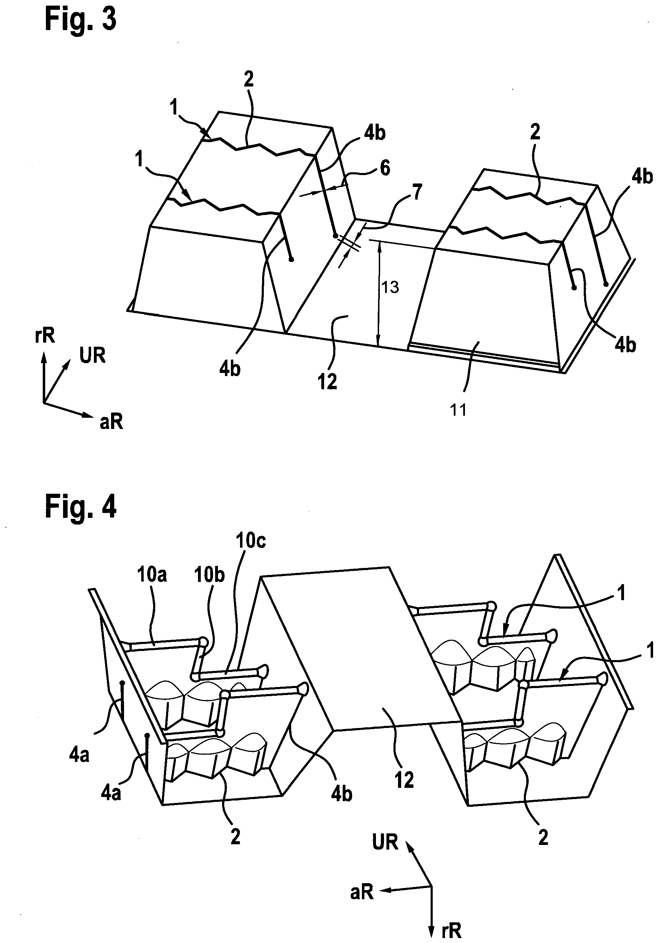

Die **Fig. 1** zeigt eine Seitenansicht des Negativs eines Feineinschnittes 1 eines erfindungsgemäßen Laufstreifenprofils und stellt im Profilpositiv des Laufstreifenprofils Leervolumen dar. Nachfolgend werden die **Fig. 2 bis 4** zusammen mit der Fig. 1 beschrieben. Die Feineinschnitte 1 aller Figuren sind gleich ausgebildet, in den Fig. 2 bis 4 sind die Feineinschnitte 1 dreidimensional dargestellt. Die Fig. 3 und 4 zeigen jeweils zwei Feineinschnitte 1 in dreidimensionaler Ansicht, welche in Profilpositiven 11 des Laufstreifenprofilausschnittes angeordnet sind, wobei die Fig. 3 das Positiv 11 und Fig. 4 das Negativ der Fig. 3 zeigt.

Der Feineinschnitt 1 erstreckt sich mit seiner Oberkante 2 von der Laufstreifenperipherie nach radial innen und endet in einem Rillengrund 3. Über seine radiale als auch axiale Erstreckung weist der Feineinschnitt 1 eine etwa gleich Breite 6 auf, während der Rillengrund 3 als Kanal ausgebildet ist und eine größere Breite 7 als der übrige Feineinschnitt 1 aufweist. Der Feineinschnitt 1 quert das Profilpositiv 11 vollständig, so dass der Feineinschnitt 1 samt Kanal 3 mit seinen beiden Enden 4a, 4b in die das Profilpositiv 11 begrenzenden Umfangsrillen 12 mündet. Der Kanal 3 ist an seinen beiden Enden 4a, 4b als Trichter 5a, 5b ausgebildet und die breite Öffnung des Trichters mündet in die Umfangsrille 12.

Der Kanal 3 besteht aus drei in Längsrichtung (entspricht der axialen Richtung (aR)) des Feineinschnittes hintereinander angeordneten Abschnitten 10a, 10b, 10c. Der erste und der dritte Abschnitt 10a, 10c verlaufen parallel zur axialen Richtung aR, sind jedoch in unterschiedlichen Tiefen angeordnet. Der zweite Abschnitt 10b verläuft quer zur axialen Richtung und verbindet den ersten Abschnitt 10a mit dem dritten Abschnitt 10c unter Bildung eines Winkels α, welcher hier 0° beträgt. Der zweite Abschnitt 10b verläuft somit in radialer Richtung (rR). Der erste Abschnitt 10a weist eine Tiefe 14 auf, welche 80% bis 100% der Tiefe einer Umfangrille 13 des Laufstreifenprofils entspricht, während der weniger tief ausgebildete dritte Abschnitt 10c eine Tiefe 15 aufweist welche 30% bis 60% der Tiefe 13 der vorgenannten Umfangsrille entspricht.

Der Trichter 5a, 5b weist in dem Ausführungsbeispiel eine Länge 8a, 8b von 4 mm auf und die Kontur der Öffnung des Trichters 5a, 5b fluchtet mit der Kontur der Kanten der Enden des Feineinschnittes 4a, 4b. Die Länge des 8a, 8b wird entlang der Längsachse des Trichters (gestrichelte Linie) gemessen.

Der Trichter 5a, 5b weist einen Durchmesser 9a, 9b auf, welcher 2x der Breite 7 des Kanals 3 entspricht. Der Durchmesser 9a, 9b des Trichters 5a, 5b wird an der Stelle seines größten Durchmessers senkrecht auf die Längsachse des Trichters 5a, 5b gemessen.

Der Kanal 3 weist eine Breite 7 von 1,8 mm auf, wobei die Breite 7 in Umfangsrichtung an der breitesten Stelle gemessen wird. Die Breite 7 des Kanals 3 ist über die Längserstreckung des Kanals 3 weitestgehend gleich.

Es sind Hohlkugeln 17 an den Anschlussstellen des zweiten Abschnittes 10b an den ersten Abschnitt 10a und des zweiten Abschnittes 10b an den dritten Abschnitt 10c ausgebildet. Der Durchmesser 16 der Hohlkugeln 17 liegt in einem Bereich von 1,2x bis 2x der Breite 7 des Kanals 3.

Die Feineinschnitte 1 können in Aufsicht auf die Laufstreifenperipherie beispielsweise gerade, wellen- oder zigzag-förmig ausgebildet sein. Im Tiefenverlauf des Feineinschnittes können -müssen aber nicht- die Feineinschnittwände unterschiedlichste dreidimensionale Strukturen aufweisen, welche über die gesamte Fläche der Feineinschnittwände oder nur über Bereiche der Fläche der Feineinschnittwände ausgebildet sind.

### Bezugszeichenliste

### (Teil der Beschreibung)

- 1: Feineinschnitt
- 2: Oberkante
- 3: Rillengrund / Kanal
- 4a: Ende des Feineinschnittes
- 4b: Ende des Feineinschnittes
- 5a: Trichter
- 5b: Trichter
- 6: Breite des Feineinschnittes
- 7: Breite des Kanals
- 8a: Länge des Trichters
- 8b: Länge des Trichters
- 9a: Durchmesser des Trichters
- 9b: Durchmesser des Trichters
- 10a: Erster Abschnitt
- 10b: Zweiter Abschnitt
- 10c: Dritter Abschnitt
- 11: Profilpositiv
- 12: Umfangsrille
- 13: Tiefe der Umfangsrille
- 14: Tiefe des ersten Abschnittes
- 15: Tiefe des dritten Abschnittes
- 16: Durchmesser der Hohlkugeln
- 17: Hohlkugel

- rR: radiale Richtung
- aR: axiale Richtung
- uR: Umfangsrichtung

## Patentansprüche

1. Laufstreifenprofil eines Fahrzeugreifens für den Einsatz auf winterlicher Fahrbahn mit Profilpositiven (11), welche von Umfangs- und/oder Querrillen (12) begrenzt sind, wobei wenigstens ein Profilpositiv (11) einen Feineinschnitt (1) aufweist, welcher sich von der Laufstreifenperipherie nach radial innen erstreckt und in einem Rillengrund (3) endet, wobei der Feineinschnitt (1) über seine radiale Erstreckung eine etwa gleich Breite (6) aufweist, während der Rillengrund als Kanal (3) ausgebildet ist, welcher eine größere Breite (7) als der übrige Feineinschnitt (1) aufweist, wobei der Feineinschnitt (1) das Profilpositiv (11) vollständig quert, sodass der Feineinschnitt (1) samt Kanal (3) mit seinen beiden Enden (4a, 4b) in die das Profilpositiv (11) begrenzenden Umfangs- und/oder Querrillen (12) mündet,
**dadurch gekennzeichnet,**
**dass** der Kanal (3) ausschließlich an seinen beiden Enden als Trichter (5a, 5b) erweitert ist, sodass die Erweiterung in der Umfangs- und/oder Querrille (12) mündet, wobei der Kanal (3) aus drei in Längsrichtung des Feineinschnittes (1) hintereinander angeordneten Abschnitten (10a, 10b, 10c) besteht, wobei der erste Abschnitt (10a) und der dritte Abschnitt (10c) parallel zur axialen Richtung (aR) verlaufen, jedoch in unterschiedlichen Tiefen (14, 15) angeordnet sind und wobei der zweite Abschnitt (10b) den ersten Abschnitt (10a) mit dem dritten Abschnitt (10c) unter Bildung eines Winkels (α), welcher von dem zweiten Abschnitt (10b) und der radialen Richtung (rR) eingeschlossen wird, verbindet, wobei der Winkel (α) in einem Bereich von 0° bis 45° liegt und wobei Hohlkugeln (11) an den Anschlussstellen des zweiten Abschnittes (10b) an den ersten Abschnitt (10a) und des zweiten Abschnittes (10b) an den dritten Abschnitt (10c) ausgebildet sind.

2. Laufstreifenprofil nach Anspruch 1,
**dadurch gekennzeichnet, dass** das Profilpositiv (11) ein Profilblock oder ein Laufstreifenband ist.

3. Laufstreifenprofil nach Anspruch 1 oder 2,
**dadurch gekennzeichnet, dass** der Trichter (5a, 5b) eine Länge (8a, 8b) aufweist, welche in einem Bereich von 1 bis 6 mm, vorzugsweise in einem PKW-oder Zweiradreifen in einem Bereich von 1 bis 4 mm, vorzugsweise in einem LKW-Reifen in einem Bereich von 3 bis 6 mm, liegt.

4. Laufstreifenprofil nach einem oder mehreren der vorangehenden Ansprüche,
**dadurch gekennzeichnet, dass** der Trichter (5a, 5b) einen Durchmesser (9a, 9b) aufweist, welcher 1,2x bis 3x, bevorzugt 2x der Breite des Kanals entspricht, wobei der Durchmesser (9a, 9b) des Trichters an der Stelle seines größten Durchmessers gemessen wird.

5. Laufstreifenprofil nach einem oder mehreren der vorangehenden Ansprüche,
**dadurch gekennzeichnet, dass** der Kanal (3) eine Breite (7) aufweist, welche in einem Bereich von 1,1 bis 2,0 mm liegt.

6. Laufstreifenprofil nach einem oder mehreren der vorangehenden Ansprüche,
**dadurch gekennzeichnet, dass** die Hohlkugeln (11) einen Durchmesser (16) aufweisen, welcher in einem Bereich von 1,2x bis 2x Breite des Kanals (7) liegt.

7. Laufstreifenprofil nach einem oder mehreren der vorangehenden Ansprüche,
**dadurch gekennzeichnet, dass** wenigstens zwei parallel zueinander angeordnete Feineinschnitte (1) in dem Profilpositiv (11) angeordnet sind und dass der zweite Abschnitt (10b) des ersten Feineinschnittes (1) eine gegenläufige Steigung zur Steigung des zweiten Abschnittes (10b) des zweiten Feineinschnittes (1) aufweist.

8. Fahrzeugluftreifen, **dadurch gekennzeichnet, dass** dieser ein Laufstreifenprofil gemäß eines oder mehrerer der vorangehenden Ansprüche aufweist.

9. Fahrzeugluftreifen nach Anspruch 8, **dadurch gekennzeichnet dass** dieser ein Nutzfahrzeugreifen oder ein PKW-Reifen ist.

## Claims

1. Tread profile of a vehicle tyre for use on a wintry roadway, with profile positives (11), which are delimited by circumferential and/or transverse grooves (12), wherein at least one profile positive (11) has a sipe (1), which extends radially inwards from the periphery of the tread and ends in a groove base (3), wherein the sipe (1) has an approximately equal width (6) over its radial extent, while the groove base is formed as a channel (3), which has a greater width (7) than the rest of the sipe (1), wherein the sipe (1) crosses the profile positive (11) completely, so that the sipe (1), together with the channel (3), opens out at both its ends (4a, 4b) into the circumferential and/or transverse grooves (12) delimiting the profile positive (11),
**characterized**
**in that** the channel (3) is widened exclusively at both its ends as a funnel (5a, 5b), so that the widening opens out in the circumferential and/or transverse groove (12), wherein the channel (3) consists of three portions (10a, 10b, 10c) arranged one behind the other in the longitudinal direction of the sipe (1), wherein the first portion (10a) and the third portion (10c) run parallel to the axial direction (aR), but are arranged at different depths (14, 15) and wherein the second portion (10b) connects the first portion (10a) to the third portion (10c) while forming an angle (α), which is enclosed by the second portion (10b) and the radial direction (rR), wherein the angle (α) lies in a range from 0° to 45° and wherein hollow spheres (11) are formed at the connection points of the second portion (10b) to the first portion (10a) and of the second portion (10b) to the third portion (10c).

2. Tread profile according to Claim 1,
**characterized in that** the profile positive (11) is a profile block or a tread bar.

3. Tread profile according to Claim 1 or 2, **characterized in that** the funnel (5a, 5b) has a length (8a, 8b), which lies in a range from 1 to 6 mm, in a passenger car or motorcycle tyre preferably in a range from 1 to 4 mm, in a truck tyre preferably in a range from 3 to 6 mm.

4. Tread profile according to one or more of the preceding claims,
**characterized in that** the funnel (5a, 5b) has a diameter (9a, 9b), which corresponds to 1.2x to 3x, preferably 2x, the width of the channel, wherein the diameter (9a, 9b) of the funnel is measured at the point of its greatest diameter.

5. Tread profile according to one or more of the preceding claims,
**characterized in that** the channel (3) has a width (7), which lies in a range from 1.1 to 2.0 mm.

6. Tread profile according to one or more of the preceding claims,
**characterized in that** the hollow spheres (11) have a diameter (16), which lies in a range from 1.2x to 2x width of the channel (7).

7. Tread profile according to one or more of the preceding claims,
**characterized in that** at least two sipes (1) arranged parallel to one another are arranged in the profile positive (11) and **in that** the second portion (10b) of the first sipe (1) has an opposite pitch to the pitch of the second portion (10b) of the second sipe (1) .

8. Pneumatic vehicle tyre, **characterized in that** it has a tread profile according to one or more of the preceding claims.

9. Pneumatic vehicle tyre according to Claim 8,
**characterized in that** it is a commercial vehicle tyre or a passenger car tyre.

## Revendications

1. Profilé de bande de roulement d'un pneumatique de véhicule destiné à être utilisé sur une route d'hiver, le profilé comprenant des profilés en relief (11) délimités par des rainures circonférentielles et/ou transversales (12), au moins un profilé en relief (11) comportant une incision fine (1) qui s'étend radialement vers l'intérieur depuis la périphérie de la bande de roulement et qui se termine dans une base de rainure (3), l'incision fine (1) ayant approximativement la même largeur (6) sur son étendue radiale tandis que la base de rainure est conçue comme un canal (3) qui a une largeur (7) plus grande que celle de la partie restante de l'incision fine (1), l'incision fine (1) traversant complètement le profilé en relief (11) de sorte que l'incision fine (1) débouche avec le canal (3) par ses deux extrémités (4a, 4b) dans les rainures circonférentielles et/ou transversales (12) délimitant le profilé en relief (11),
**caractérisé en ce que**
le canal (3) est élargi en entonnoir (5a, 5b) exclusivement à ses deux extrémités de sorte que l'élargissement débouche dans la rainure circonférentielle et/ou transversale (12), le canal (3) comprenant trois portions (10a, 10b, 10c) disposées l'une derrière l'autre dans la direction longitudinale de l'incision fine (1), la première portion (10a) et la troisième portion (10c) s'étendant parallèlement à la direction axiale (aR), mais sont disposées à différentes profondeurs (14, 15) et la deuxième portion (10b) reliant la première portion (10a) à la troisième portion (10c) en formant un angle (α) qui est compris entre la deuxième portion (10b) et la direction radiale (rR), l'angle (α) étant dans la plage allant de 0° à 45° et des billes creuses (11) étant formées aux points de raccordement de la deuxième portion (10b) à la première portion (10a) et de la deuxième portion (10b) à la troisième portion (10c).

2. Profilé de bande de roulement selon la revendication 1,
**caractérisé en ce que** le profilé en relief (11) est un bloc profilé ou une nappe de bande de roulement.

3. Profilé de bande de roulement selon la revendication 1 ou 2,
**caractérisé en ce que** l'entonnoir (5a, 5b) a une longueur (8a, 8b) qui est dans une plage de 1 à 6 mm, de préférence dans une plage de 1 à 4 mm pour un pneumatique de voiture particulière ou de deux roues, de préférence une plage de 3 à 6 mm pour un pneumatique de camion.

4. Profilé de bande de roulement selon l'une au moins des revendications précédentes, **caractérisé en ce que** l'entonnoir (5a, 5b) a un diamètre (9a, 9b) qui correspond à 1,2 à 3 fois, de préférence 2 fois, la largeur du canal, le diamètre (9a, 9b) de l'entonnoir étant mesuré à l'emplacement de son plus grand diamètre.

5. Profilé de bande de roulement selon l'une au moins des revendications précédentes, **caractérisé en ce que** le canal (3) a une largeur (7) qui est dans une plage de 1,1 à 2,0 mm.

6. Profilé de bande de roulement selon l'une au moins des revendications précédentes, **caractérisé en ce que** les billes creuses (11) ont un diamètre (16) qui est dans une plage de 1,2 à 2 fois la largeur du canal (7).

7. Profilé de bande de roulement selon l'une au moins des revendications précédentes, **caractérisé en ce qu'**au moins deux incisions fines parallèles (1) sont disposées dans le profilé en relief (11) et **en ce que** la deuxième portion (10b) de la première incision fine (1) a une obliquité opposée à l'obliquité de la deuxième portion (10b) de la deuxième incision fine (1) .

8. Pneumatique de véhicule, **caractérisé en ce qu'**il comprend un profilé de bande de roulement selon l'une au moins des revendications précédentes.

9. Pneumatique de véhicule selon la revendication 8,
**caractérisé en ce que** celui-ci est un pneumatique de véhicule utilitaire ou un pneumatique de voiture particulière.
